# EUROPÄISCHE PATENTSCHRIFT

(11) **EP 2 834 602 B1**
(45) Veröffentlichungstag und Bekanntmachung des Hinweises auf die Patenterteilung: **26.02.2020**
(21) Anmeldenummer: 13713118.1
(22) Anmeldetag: 19.03.2013
(51) Int. Cl.: G01F 1/58, G01F 15/00

(54) **DURCHFLUSSMESSGERÄT**
FLOWMETER
DÉBITMÈTRE

(30) Priorität: 05.04.2012 DE 102012102979
(43) Veröffentlichungstag der Anmeldung: 11.02.2015
(73) Patentinhaber: Endress+Hauser Flowtec AG, 4153 Reinach (BL) (CH)
(72) Erfinder: SULZER, Thomas, 79639 Grenzach-Wyhlen (DE); OUDOIRE, Patrick, F-68360 Soultz (FR)
(74) Vertreter: Andres, Angelika Maria
(86) Internationale Anmeldenummer: PCT/EP2013/055615
(87) Internationale Veröffentlichungsnummer: WO 2013/149818

(56) Entgegenhaltungen:
- WO-A1-2009/097549
- WO-A1-2009/124875
- FR-A2- 2 451 022
- US-A- 4 548 078

## Beschreibung

Die vorliegende Erfindung betrifft ein magnetisch-induktives Durchflussmessgerät.

Durchflussmessgeräte sind insbesondere in der Prozessautomatisierungstechnik weit verbreitet. Beispielsweise nutzen magnetisch-induktive Durchflussmessgeräte zur volumetrischen Strömungsmessung das Prinzip der elektrodynamischen Induktion aus und sind aus einer Vielzahl von Veröffentlichungen bekannt. So zeigt die Offenlegungsschrift DE 10347890 A1 ein magnetisch-induktives Durchflussmessgerät mit einem Messrohr aus Schichten von Faserverbundwerkstoffen. Dabei sind die Teilsysteme des magnetisch-induktiven Messgeräts ganz oder teilweise durch Schichten aus Faserverbundwerkstoffen gebildet oder in Schichten von Faserverbundwerkstoffen eingebettet. Diese magnetisch-induktiven Messgeräte weisen eine Nennweite von 6 bis 2000 mm auf, um auch größere Durchflussmengen bestimmen zu können.

In Bezug auf die Messung geringer Durchflussmengen sind bereits Durchflussmessgeräte bekannt, welche nicht auf dem Prinzip der magnetischen Induktion beruhen. So zeigt die Offenlegungsschrift US 4548078 A ein integriertes Durchflussmessgerät mit einem dem Führen eines fließfähigen Mediums dienenden Leitungsabschnitt, wobei der Leitungsabschnitt wenigstens teilweise aus einer Ausnehmung in einer Leiterplatte gebildet wird, wobei die Messtechnik auf Dünnschichtwärmesensorik basiert. Eine weitere Offenlegungsschrift, die ein Durchflussmessgerät auf Wärmetausch basierend zeigt, ist FR 2451022. Die Offenlegungsschriften WO 2009/124875 A2 und WO 2009/097549 A1 beschreiben integrierte Durchflussmessgeräte nach dem Differenzdruckprinzip.

Der vorliegenden Erfindung liegt die Aufgabe zu Grunde, auch geringere Durchflussmengen zuverlässig bestimmen zu können.

Diese Aufgabe wird erfindungsgemäß durch ein magnetisch-induktives

Durchflussmessgerät mit einem, dem Führen eines fließfähigen Mediums dienenden Leitungsabschnitt gelöst, wobei der Leitungsabschnitt wenigstens teilweise aus einer Ausnehmung in einer Leiterplatte gebildet wird, wobei auf der Leiterplatte oder auf verschiedenen Lagen der Leiterplatte ein Magnetsystem vorgesehen ist, das dazu dient,
eine Spannung in dem während des Betriebs des Durchfluss-Messgeräts den Leitungsabschnitt durchströmenden Mediums zu induzieren.

In einer weiteren Ausgestaltung des Durchflussmessgeräts umfasst das Magnetsystem ein oder mehrere Planarspulen.

In einer Ausgestaltung des Durchflussmessgerätes ist eine dem Erfassen einer elektrischen Spannung dienende Messstrecke in dem Leitungsabschnitt integriert.

In einer weiteren Ausgestaltung des Durchflussmessgerätes wird der Leitungsabschnitt teilweise aus einer länglichen Öffnung in der Leiterplatte gebildet. Bei der Ausnehmung kann es sich also um eine durch die Leiterplatte hindurch verlaufende Öffnung oder einen Kanal handeln, durch den hindurch der Messstoff geführt wird.

In einer weiteren Ausgestaltung des Durchflussmessgerätes besteht der Leitungsabschnitt im Wesentlichen aus der Leiterplatte bzw. aus dem Material der Leiterplatte. Die Leiterplatte besteht dabei aus einem Polyamid, einem Epoxid oder einem mit Glasfasern versetzten Epoxid.

In einer weiteren Ausgestaltung des Durchflussmessgerätes ist eine Beschichtung auf eine, die Ausnehmung begrenzende Wandung der Leiterplatte aufgebracht, welche die Beschichtung dazu dient, die Leiterplatte bzw. das Material der Leiterplatte gegenüber dem durch dem Leitungsabschnitt fließenden Medium abzudichten. Die Ausnehmung und also auch der Leitungsabschnitt können dabei in die Leiterplatte gefräst werden. Die Wandung der Ausnehmung bzw. des Leitungsabschnitts können dann beschichtet werden. Dazu kann beispielsweise ein Lack wie Parylen verwendet werden.

In einer weiteren Ausgestaltung des Durchflussmessgerätes handelt es sich bei der Leiterplatte um eine mehrschichtige Leiterplatte, eine so genannte Multilayer-Leiterplatte, bei der Leiterbahn auf mehreren Schichten der Leiterplatte aufgebracht sind. Dabei können die verschiedenen Komponenten des Messsystems, also in verschiedenen Schichten, d. h. Lagen der Leiterplatte angeordnet sein. Dabei ist es auch möglich, mehrere Leiterplatten übereinander anzuordnen, die jeweils unterschiedliche Komponenten des Messsystems aufweisen. So ist es beispielsweise möglich, dass Magnetsystem des magnetisch-induktiven Durchflussmessgerätes auf verschiedenen Lagen der Leiterplatte oder verschiedene Leiterplatten anzuordnen. In einer mittleren Lage zwischen den beiden Magnetsystemen können dann Elektroden angeordnet sein, um eine in dem Medium induzierte Spannung zu erfassen.

In einer weiteren Ausgestaltung des Durchflussmessgerätes kann eine Betriebselektronik auf der Leiterplatte angeordnet sein, welche Betriebselektronik zum Betreiben des Durchflussmessgerätes dient. Die Betriebselektronik kann dabei zum Ausführen der Funktionen des Durchflussmessgerätes, wie beispielsweise zur Erfassung der Messgröße dienen. Die Betriebselektronik kann ferner dazu dienen, die Messgröße in ein der Messgröße entsprechendes Messsignal zu wandeln. Dadurch, dass die Bebtriebselektronik als auch der Leitungsabschnitt auf einer einzigen Leiterplatte angeordnet sind, wird ein kompakter Aufbau eines Durchflussmessgerätes erreicht.

In einer weiteren Ausgestaltung des Durchflussmessgerätes ist die Leiterplatte modular aufgebaut und weist ein erstes Modul auf, auf dem die Betriebselektronik angeordnet ist. Ferner weist die Leiterplatte ein zweites Modul auf, das mit dem ersten Modul elektrisch und/oder mechanisch verwendbar ist, auf welchem zweiten Modul sich der Leitungsabschnitt befindet. Dadurch kann ein Durchflussmessgerät mit einem austauschbaren Leitungsabschnitt hergestellt werden.

In einer weiteren Ausgestaltung des Durchflussmessgerätes ist das Magnetsystem auf dem zweiten Modul vorgesehen. Im Weiteren sind wenigstens zwei Messelektroden auf dem zweiten Modul der Leiterplatte oder zwischen zwei Schichten des zweiten Moduls der Leiterplatte vorgesehen. Diese beiden Elektroden können dazu dienen, die in dem Medium induzierte Spannung abzugreifen. Bei den Elektroden kann es sich um Mediumsberührende als auch um das Medium nicht berührende Elektroden handeln.

In einer weiteren Ausgestaltung des Durchflussmessgerätes weist die Leiterplatte eine Vorderseite und eine Rückseite auf, wobei auf der Vorderseite und/oder Rückseite elektrische und/oder elektronische Bauteile befestigt sind, und wobei die den Leitungsabschnittbildende Ausnehmung im Wesentlichen in einer Ebene parallel zu einer die Vorderseite bzw. die Rückseite Ebene verläuft.

In einer weiteren Ausgestaltung des Durchflussmessgerätes sind ein Einlauf und ein Auslauf auf dem zweiten Modul des Durchflussmessgerätes vorgesehen, um das Medium in den Leitungsabschnitt einzuleiten bzw. aus dem Leitungsabschnitt abzuleiten. Einlauf und Auslauf können dabei auf derselben Seite beispielsweise der Vorderseite der Leiterplatte angeordnet sein.

In einer weiteren Ausgestaltung des Durchflussmessgerätes wird der Leitungsabschnitt aus mehreren Leiterplatten gebildet, wobei in einer ersten Leiterplatte eine erste Ausnehmung und auf einer zweiten Leiterplatte eine zweite Ausnehmung vorgesehen sind, wobei die erste und die zweite Leiterplatte derart verbunden sind oder verbindbar sind, dass ein Leitungsabschnitt gebildet wird, der zum Führen des Mediums dient.

In einer weiteren Ausgestaltung des Durchflussmessgerätes bilden die erste und die zweite Ausnehmungsschalen, aus dem der Leitungsabschnitt besteht. Auf diese Weise kann ein Leitungsabschnitt mit einem kreisförmigen oder einem quadratischen Querschnitt gebildet werden, dessen Wandung aus der ersten und der zweiten Leiterplatte besteht. Zu diesem Zweck können die erste und die zweite Leiterplatte jeweils eine Ausnehmung gefräst werden.

Es wird also durch die vorliegende Erfindung ein Durchflussmessgerät vorgeschlagen, dass im Wesentlichen aus einer Leiterplatte besteht. Auf der Leiterplatte können also sowohl die Betriebselektronik als auch ein, das Medium führende Messkanal angeordnet sein. Es ist in diesem Fall kein zusätzliches Messrohr zum Führen des Mediums erforderlich. Vielmehr wird durch die vorgeschlagene Erfindung die Leiterplatte selbst zum Führen des Mediums genutzt. Es ist somit ein kleines, schmales Durchflussmessgerät, das speziell bei kleinen Nennweiten Vorteile aufweist möglich. Das Durchflussmessgerät weist somit eine Dicke von einer oder im Fall von mehreren Leiterplatten mehrere Leiterplattendicken auf. Das vorgeschlagene Durchflussmessgerät ist somit speziell für Anwendungen in sterilen Bereichen, wie Krankenhäusern beispielsweise bei Bluttransfusionen einsetzbar. Andererseits sind auch Laboranwendungen beispielsweise in Experimentalbereichen für Versuchsaufbauten und Kontrollmessungen möglich.

Die Erfindung wird anhand nachfolgender Zeichnung näher erläutert.

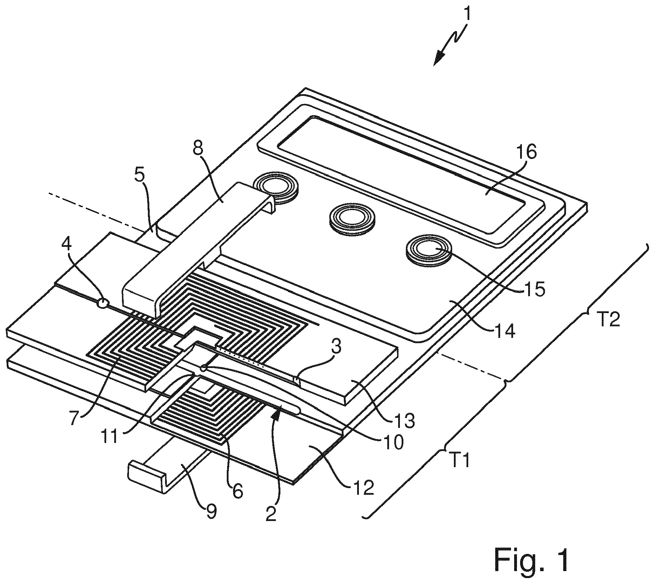

Figur 1 zeigt: eine schematische Darstellung einer Ausführungsform der vorgeschlagenen Erfindung.

Figur 1 zeigt ein Durchflussmessgerät 1, das im Wesentlichen aus einer Leiterplatte 5 besteht. In einem ersten Teilbereich T1 dieser Leiterplatte 5 ist der Leitungsabschnitt 2 zum Führen des Mediums angeordnet. In einem zweiten Abschnitt T2 der Leiterplatte 5 ist eine Bedienvorrichtung 14, 15, 16 angeordnet. Unterhalb der Bedienvorrichtung 14, 15, 16 befindet sich eine Betriebselektronik 14, welche die Funktionen des Durchflussmessgeräts 1 ausführt oder steuert.

Der erste Teilbereich T1 weist eine Messanordnung 6, 7 8, 9, 10, 11 zum magnetisch-induktiven bestimmen des Durchflusses auf. In der Leiterplatte 2 ist zur Führung des Mediums eine Ausnehmung 2 vorgesehen. Das Medium wird durch Ein- und Ausläufe 3, 4 in den Leitungsabschnitt 2 geführt. In dem Leitungsabschnitt 2, der durch die Leiterplatte 5 gebildet wird, sind mediumsberührende Elektroden 10, 11 vorgesehen. Diese Elektroden 10, 11 befinden sich in der Wandung des Leitungsabschnitts 2 und in der Leiterplatte 5. Die Elektroden 10, 11 sind mit der Betriebselektronik 14 verbunden, so dass ein von den Elektroden 10, 11 aufgenommenes Messsignal von dieser Betriebselektronik 14 weiterverarbeitet werden kann. Die Betriebselektronik 14 ist dabei stark vereinfach schematisch dargestellt. Zur Induktion einer Messspannung in dem Medium ist ein Magnetsystem 6, 7 vorgesehen. Dieses Magnetsystem 6, 7, 8, 9, 10, 11 besteht im Wesentlichen aus zwei Planarspulen 6, 7, die oberhalb und unterhalb des Leitungsabschnitts 2 angeordnet sind. Die obere Leiterplatte 13 wird dabei an der Vorderseite der Leiterplatte 5 angebracht und die untere Leiterplatte 12 an der Rückseite der Leiterplatte 5 befestigt. Ferner sind Leitbleche 8, 9 vorgesehen, die zur Führung des durch die Planarspulen 6, 7 erzeugten Magnetfeldes dienen. Diese Leitbleche 8, 9 dienen auch zur Befestigung der oberen und unteren Leiterplatte 12, 13. Da das vorgeschlagene Durchflussmessgerät 1 nur für kleine Durchflussmengen vorgesehen ist, sind künftig auch relativ geringe Ströme zur Erzeugung des Magnetfeldes erforderlich. Beispielsweise kann es ausreichend sein, wenn das Magnetsystem 6, 7 ,8, 9, 10, 11 lediglich von einem Strom von der Stärke geringer als 85 mA betrieben wird.

Anstelle des gezeigten magnetisch-induktiven Durchflussmessgerätes 1, das aus mehreren Leiterplatten 5, 12, 13 besteht ist es auch möglich ein magnetisch-induktives Durchflussmessgerät 1 herzustellen, das aus einer einzigen Leiterplatte 5 besteht. In dieser Ausführungsform ist es möglich, die Vorder- und/oder Rückseite der Leiterplatte 5 direkt mit Planarspulen 6, 7 zu versehen.

### Bezugszeichenliste

- 1: Durchfluss-Messgerät
- 2: Leitungsabschnitt
- 3: Einlauf
- 4: Auslauf
- 5: Leiterplatte
- 6: erste Magnetspule
- 7: zweite Magnetspule
- 8: erstes Leitblech
- 9: zweites Leitblech
- 10: erste Messelektrode
- 11: zweite Messelektrode
- 12: obere Leiterplatte
- 13: untere Leiterplatte
- 14: Betriebselektronik
- 15: Tastschalter
- 16: Display
- T1: erster Abschnitt der Leiterplatte
- T2: zweiter Abschnitt der Leiterplatte

## Patentansprüche

1. Durchfluss-Messgerät (1) mit einem dem Führen eines fließfähigen Mediums dienenden Leitungsabschnitt (2), wobei der Leitungsabschnitt (2) wenigstens teilweise aus einer Ausnehmung in einer Leiterplatte (5) gebildet wird; **dadurch gekennzeichnet, dass** auf der Leiterplatte (5) oder auf verschiedenen Lagen der Leiterplatte (5) ein Magnetsystem (6, 7, 8, 9, 10,11) vorgesehen ist, das
dazu dient, eine elektrische Spannung in dem während des Betriebs des Durchfluss-Messgeräts (1) den Leitungsabschnitt (2) durchströmenden Medium zu induzieren.

2. Durchfluss-Messgerät (1) nach Anspruch 1, **dadurch gekennzeichnet, dass** das Magnetsystem aus Planarspulen (6,7) besteht.

3. Durchfluss-Messgerät (1) nach einem der vorherigen Ansprüche, **dadurch gekennzeichnet,**
**dass** eine dem Erfassen der elektrischen Spannung dienende Messtrecke in den Leitungsabschnitt (2) integriert ist.

4. Durchfluss-Messgerät (1) nach einem der vorherigen Ansprüche, **dadurch gekennzeichnet,**
**dass** der Leitungsabschnitt (2) wenigstens teilweise aus einer länglichen Öffnung in der Leiterplatte (5) gebildet wird.

5. Durchfluss-Messgerät (1) nach einem der vorherigen Ansprüche, **dadurch gekennzeichnet,**
**dass** der Leitungsabschnitt (2) im Wesentlichen aus der Leiterplatte (5) bzw. dem Material der Leiterplatte (5) besteht.

6. Durchfluss-Messgerät (1) nach einem der vorherigen Ansprüche, **dadurch gekennzeichnet,**
**dass** eine Beschichtung auf eine die Ausnehmung begrenzende Wandung der Leiterplatte (5) aufgebracht ist, welche Beschichtung dazu dient, die Leiterplatte (5) bzw. das Material der Leiterplatte gegenüber dem durch den Leitungsabschnitt (2) fließenden Medium abzudichten.

7. Durchfluss-Messgerät (1) nach einem der vorherigen Ansprüche, **dadurch gekennzeichnet,**
**dass** es sich bei der Leiterplatte (5) um eine mehrschichtige Leiterplatte, eine sog. Multilayer-Leiterplatte, handelt, bei der Leiterbahnen auf mehreren Schichten der Leiterplatte (5) aufgebracht sind.

8. Durchfluss-Messgerät (1) nach einem der vorherigen Ansprüche, **dadurch gekennzeichnet,**
**dass** auf der Leiterplatte (1) eine Betriebselektronik (14) angeordnet ist, die zum Betreiben des Durchfluss-Messgerätes (1) dient.

9. Durchfluss-Messgerät (1) nach einem der vorherigen Ansprüche, **dadurch gekennzeichnet,**
**dass** die Leiterplatte (5) modular aufgebaut ist und ein erstes Modul (T2) aufweist, auf dem die Betriebselektronik (14) angeordnet ist,
**dass** die Leiterplatte (5) ferner ein zweites Modul (T1) aufweist, das mit dem ersten Modul (T2) elektrisch und/oder mechanisch verbindbar ist,
auf welchem zweiten Modul (T1) sich der Leitungsabschnitt (2) befindet.

10. Durchfluss-Messgerät (1) nach Anspruch 9,
**dadurch gekennzeichnet,**
**dass** sich das Magnetsystem (6, 7, 8, 9, 10,11) auf dem zweiten Modul (T1) befindet, weiterhin **dadurch gekennzeichnet, dass** wenigstens zwei Messelektroden (10, 11) auf dem zweiten Modul oder zwischen zwei Schichten des zweiten Moduls (T1) vorgesehen sind, die dazu dienen, die in dem Medium induzierte elektrische Spannung abzugreifen.

11. Durchfluss-Messgerät (1) nach einem der vorherigen Ansprüche, **dadurch gekennzeichnet,**
**dass** die Leiterplatte (5) eine Vorderseite und eine Rückseite aufweist, dass auf der Vorderseite und/oder der Rückseite elektrische und/oder elektronische Bauteile (6, 7, 12, 13) befestigt sind und
**dass** die den Leitungsabschnitt (2) bildende Ausnehmung im Wesentlichen in einer Ebene parallel zu einer durch die Vorderseite bzw. die Rückseite verlaufenden Ebene verläuft.

12. Durchfluss-Messgerät (1) nach Anspruch 9,
**dadurch gekennzeichnet,**
**dass** ein Einlauf und ein Auslauf (3, 4), auf dem zweiten Modul (T1), vorgesehen sind, um das Medium in den Leitungsabschnitt (2) einzuleiten bzw. aus dem Leitungsabschnitt (2) auszuleiten.

13. Durchfluss-Messgerät (1) nach einem der vorherigen Ansprüche, **dadurch gekennzeichnet,**
**dass** der Leitungsabschnitt (2) aus mehreren Leiterplatten (5, 12) gebildet wird,
wobei in einer ersten Leiterplatte (5, 12) eine erste Ausnehmung und auf einer zweiten Leiterplatte (13) eine zweite Ausnehmung vorgesehen sind,
wobei die erste und die zweite Leiterplatte (5, 12, 13) derart verbunden sind oder verbindbar sind, dass ein Leitungsabschnitt (2) gebildet wird, der zum Führen des Mediums dient.

14. Durchfluss-Messgerät nach Anspruch 13,
**dadurch gekennzeichnet,**
**dass** die erste und die zweite Ausnehmung Schalen bilden, aus denen der Leitungsabschnitt (2) besteht.

## Claims

1. Flowmeter (1) with a section of pipe (2) serving to conduct a flowing medium, wherein the section of pipe (2) is at least partially formed from a recess in a printed circuit board (5); **characterized in that** a magnetic system (6, 7, 8, 9, 10, 11) is provided on the printed circuit board (5) or on various layers of the printed circuit board (5), said magnetic system serving to induce an electrical voltage in the medium flowing through the section of pipe (2) while the flowmeter is in operation.

2. Flowmeter (1) as claimed in Claim 1, **characterized in that** the magnetic system consists of planar coils (6, 7).

3. Flowmeter (1) as claimed in one of the previous claims,
**characterized in that**
a measurement section serving to measure the electrical voltage is integrated into the section of pipe (2).

4. Flowmeter (1) as claimed in one of the previous claims, **characterized in that** the section of pipe (2) is formed at least partially by an oblong opening in the printed circuit board (5).

5. Flowmeter (1) as claimed in one of the previous claims, **characterized in that** the section of pipe (2) essentially consists of the printed circuit board (5) and the material of the printed circuit board (5).

6. Flowmeter (1) as claimed in one of the previous claims,
**characterized in that**
a coating is applied on a wall of the printed circuit board (5) that delimits the recess, said coating serving to seal the printed circuit board (5) and the material of the printed circuit board against medium flowing through the section of pipe (2).

7. Flowmeter (1) as claimed in one of the previous claims,
**characterized in that**
the printed circuit board (5) is a multilayer printed circuit board on which conductive tracks are applied on several layers of the printed circuit board (5).

8. Flowmeter (1) as claimed in one of the previous claims,
**characterized in that**
an operating electronics unit (14) is arranged on the printed circuit board (5), said operating electronics unit (14) serving to operate the flowmeter (1).

9. Flowmeter (1) as claimed in one of the previous claims,
**characterized in that**
the printed circuit board (5) is structured in a modular manner and features a first module (T2) on which the operating electronics unit (14) is arranged,
**in that** the printed circuit board (5) further features a second module (T1), wherein said second module can be connected electrically and/or mechanically to the first module (T2), wherein the section of pipe (2) is located on said second module (T1).

10. Flowmeter (1) as claimed in Claim 9,
**characterized in that**
the magnetic system (6, 7, 8, 9, 10, 11) is located on the second module (T1), further **characterized in that** at least two measuring electrodes (10, 11) are provided on the second module or between two layers of the second module (T1), said electrodes serving to measure the electrical voltage induced in the medium.

11. Flowmeter (1) as claimed in one of the previous claims,
**characterized in that**
the printed circuit board (5) has a front face and a rear face,
**in that** electrical and/or electronic components (6, 7, 12, 13) are secured on the front face and/or rear face,
and **in that** the recess forming the section of pipe (2) essentially extends over a plane parallel to a plane extending through the front face or rear face.

12. Flowmeter (1) as claimed in Claim 9,
**characterized in that**
an inlet and an outlet (3, 4) are provided on the second module (T1) serving to introduce the medium into the section of pipe (2) or channel the medium out of the section of pipe (2).

13. Flowmeter (1) as claimed in one of the previous claims,
**characterized in that**
the section of pipe (2) is made from multiple printed circuit boards (5, 12), wherein a first recess is provided in a first printed circuit board (5, 12) and a second recess is provided in a second printed circuit board (13),
wherein the first and the second printed circuit board (5, 12, 13) are connected or can be connected in such a way that a section of pipe (2) is formed that serves to conduct the medium.

14. Flowmeter (1) as claimed in Claim 13,
**characterized in that**
the first and the second recess form shells from which the section of pipe (2) is made.

## Revendications

1. Débitmètre (1) avec une portion de conduit (2) servant au guidage d'un produit fluide, la portion de conduit (2) étant formée au moins partiellement par un évidement dans une carte de circuit imprimé (5) ; **caractérisé en ce qu'**est prévu, dans la carte de circuit imprimé (5) ou sur différentes couches de la carte de circuit imprimé (5), un système magnétique (6, 7, 8, 9, 10, 11), lequel sert à induire une tension électrique dans le produit parcourant la portion de conduit (2) pendant le fonctionnement du débitmètre.

2. Débitmètre (1) selon la revendication 1, **caractérisé en ce que** le système magnétique est constitué de bobines planes (6, 7).

3. Débitmètre (1) selon l'une des revendications précédentes,
**caractérisé**
**en ce qu'**un tronçon de mesure, servant à mesurer la tension électrique, est intégré dans la portion de conduit (2).

4. Débitmètre (1) selon l'une des revendications précédentes, **caractérisé en ce que** la portion de conduit (2) est formée au moins partiellement d'une ouverture oblongue dans la carte de circuit imprimé (5).

5. Débitmètre (1) selon l'une des revendications précédentes, **caractérisé en ce que** la portion de conduit (2) est formée pour l'essentiel de la carte de circuit imprimé (5) ou du matériau de la carte de circuit imprimé (5).

6. Débitmètre (1) selon l'une des revendications précédentes,
**caractérisé**
**en ce qu'**un revêtement est appliqué sur une paroi de la carte de circuit imprimé, délimitant l'évidement, lequel revêtement sert à assurer l'étanchéité de la carte de circuit imprimé (5) ou du matériau de la carte de circuit imprimé par rapport au produit s'écoulant à travers la portion de conduit (2).

7. Débitmètre (1) selon l'une des revendications précédentes,
**caractérisé**
**en ce qu'**il s'agit, concernant la carte de circuit imprimé (5), d'une carte de circuit imprimé multicouche, sur laquelle les pistes conductrices sont appliquées sur plusieurs couches de la carte de circuit imprimé (5).

8. Débitmètre (1) selon l'une des revendications précédentes,
**caractérisé**
**en ce qu'**est disposée, sur la carte de circuit imprimé (5), une électronique d'exploitation (14) servant à l'exploitation du débitmètre (1).

9. Débitmètre (1) selon l'une des revendications précédentes,
**caractérisé**
**en ce que** la carte de circuit imprimé (5) est structurée de façon modulaire et comporte un premier module (T2), sur lequel est disposée l'électronique d'exploitation (14),
**en ce que** la carte de circuit imprimé (5) comporte en outre un deuxième module (T1), lequel module peut être relié électriquement et/ou mécaniquement avec le premier module (T2), sur lequel deuxième module (T1) se trouve la portion de conduit (2).

10. Débitmètre (1) selon la revendication 9,
**caractérisé**
**en ce que** le système magnétique (6, 7, 8, 9, 10, 11) se trouve sur le deuxième module (T1), **caractérisé en outre en ce que** sont prévues au moins deux électrodes de mesure (10, 11) sur le deuxième module ou entre deux couches du deuxième module (T1), lesquelles électrodes servent à prélever la tension électrique induite dans le produit.

11. Débitmètre (1) selon l'une des revendications précédentes,
**caractérisé**
**en ce que** la carte de circuit imprimé (5) présente une face avant et une face arrière,
**en ce que** sont fixés, sur la face avant et/ou sur la face arrière, des composants électriques et/ou électroniques (6, 7, 12, 13), et
**en ce que** l'évidement formant la portion de conduit (2) s'étend pour l'essentiel dans un plan parallèle à un plan passant par la face avant ou la face arrière.

12. Débitmètre (1) selon la revendication 9,
**caractérisé**
**en ce que** sont prévues, sur le deuxième module (T1), une entrée et une sortie (3, 4) servant à injecter le produit dans la portion de conduit (2) et à évacuer le produit de la portion de conduit (2).

13. Débitmètre (1) selon l'une des revendications précédentes,
**caractérisé**
**en ce que** la portion de conduit (2) est constituée de plusieurs cartes de circuit imprimé (5, 12),
un premier évidement étant prévu dans la première carte de circuit imprimé (5, 12) et un deuxième évidement étant prévu dans la deuxième carte de circuit imprimé (13),
la première et la deuxième carte de circuit imprimé (5, 12, 13) étant reliées ou pouvant être reliées de telle sorte que se forme une portion de conduit (2), laquelle sert au guidage du produit.

14. Débitmètre (1) selon la revendication 13,
**caractérisé**
**en ce que** le premier et le deuxième évidement forment des coques, qui constituen la portion de conduit (2).
